# EUROPÄISCHE PATENTSCHRIFT

(11) **EP 3 277 090 B1**
(45) Veröffentlichungstag und Bekanntmachung des Hinweises auf die Patenterteilung: **26.12.2018**
(21) Anmeldenummer: 16710153.4
(22) Anmeldetag: 15.03.2016
(51) Int. Cl.: A21B 5/02, A21B 7/00

(54) **SYSTEM AUS GERÄT UND KOMPAKTER KAPSEL ZUR HERSTELLUNG EINES BACKERZEUGNISSES**
SYSTEM COMPRISING A DEVICE AND A COMPACT CAPSULE FOR PRODUCING A BAKED GOOD
SYSTÈME COMPRENANT UN APPAREIL DE PRODUCTION D'UN PRODUIT DE BOULANGERIE ET UNE CAPSULE COMPACTE

(30) Priorität: 30.03.2015 DE 102015205706
(43) Veröffentlichungstag der Anmeldung: 07.02.2018
(73) Patentinhaber: BSH Hausgeräte GmbH, 81739 München (DE)
(72) Erfinder: SCHÜSSLER, Andreas, 81541 München (DE); SCHUSTER, Lucia, 80336 München (DE); WINNER, Sebastian, 89537 Giengen (DE); REHFUSS, Evgeni, 81673 München (DE); PEIJAN, Anne, 14789 Bensdorf (DE); FISCHER, Manuel, 83135 Schechen (DE); METZ, Rudolf, 82049 Pullach (DE)
(86) Internationale Anmeldenummer: PCT/EP2016/055543
(87) Internationale Veröffentlichungsnummer: WO 2016/156027

(56) Entgegenhaltungen:
- DE-A1-102010 034 791
- DE-A1-102010 064 113
- DE-U1-202012 006 367

## Beschreibung

Die Erfindung betrifft ein System umfassend ein Gerät und eine kompakte Kapsel zur Herstellung eines individuell portionierten Backerzeugnisses, wobei das Gerät umfasst: Eine Aufnahmeeinheit, die eingerichtet ist, eine kompakte Kapsel aufzunehmen, wobei die Kapsel eine Menge von Inhaltsstoffen umfasst, die genau für die Herstellung eines individuell portionierten Backerzeugnisses ausreicht; wobei die Inhaltsstoffe eine Backmischung für das Backerzeugnis umfassen; wobei die Aufnahmeeinheit eine Öffnung aufweist, durch die die Kapsel in das Gerät eingeführt werden kann; und wobei die Aufnahmeeinheit eingerichtet ist, die Kapsel zu öffnen, um die Inhaltsstoffe freizusetzen, einen Mischer, der eingerichtet ist, einen Teig für das Backerzeugnis aus der Backmischung herzustellen, eine Backeinheit, die eingerichtet ist, den Teig zu backen, eine Steuereinheit, die eingerichtet ist, zu veranlassen, dass aus den Inhaltsstoffen einer in die Aufnahmeeinheit eingeführten Kapsel ein Teig hergestellt wird, und dass der Teig in der Backeinheit gebacken wird.

Ein solches Gerät geht jeweils hervor aus den Dokumenten DE 10 2010 034 791 A1 und DE 20 2012 006 367 U1. Gemäß erstgenanntem Dokument ist das offenbarte Gerät eine Brotbackmaschine, gemäß zweitgenanntem Dokument ein Keksbackautomat.

Es sind automatische Kaffeemaschinen, insbesondere Espressomaschinen, bekannt, die es einem Nutzer ermöglichen, in individueller Weise eine Tasse Kaffee herzustellen. Dabei können bei der Herstellung der Tasse Kaffee geschmacksbestimmende Parameter wie Wassermenge oder Kaffeepulvermenge individuell an die Präferenzen des Nutzers angepasst werden.

Viele Nutzer konsumieren zu einer Tasse Kaffee gerne ein Stück süßes Gebäck, wie z.B. einen Keks bzw. einen "Cookie". Das vorliegende Dokument befasst sich mit der technischen Aufgabe, ein Gerät bereitzustellen, welches es einem Nutzer ermöglicht, in effizienter und individueller Weise ein Backerzeugnis herzustellen.

Die Aufgabe wird durch die Gegenstände der unabhängigen Patentansprüche gelöst. Vorteilhafte Ausführungsformen sind insbesondere in den abhängigen Patentansprüchen definiert, in nachfolgender Beschreibung beschrieben oder in beigefügter Zeichnung dargestellt.

Gemäß einem Aspekt der Erfindung wird ein Gerät zur Herstellung eines Backerzeugnisses beschrieben. Insbesondere kann durch das Gerät ein individuell portioniertes Backerzeugnis, z.B. ein einzelner Keks, hergestellt werden. Das Gerät umfasst eine Aufnahmeeinheit, die eingerichtet ist, eine Kapsel (bzw. eine Kartusche) aufzunehmen. Dabei umfasst die Kapsel Inhaltsstoffe für die Herstellung eines Backerzeugnisses. Insbesondere kann die Kapsel eine Menge von Inhaltsstoffen enthalten, die für die Herstellung genau eines einzigen Backerzeugnisses ausreicht. Mit anderen Worten, die Menge von Inhaltsstoffen in einer Kapsel kann genau für die Herstellung eines einzigen Backerzeugnisses portioniert sein.

Die Aufnahmeeinheit kann eine (ggf. verschließbare) Öffnung aufweisen, durch die die Kapsel in das Gerät eingeführt werden kann. Des Weiteren kann die Aufnahmeeinheit eingerichtet sein, die Kapsel zu öffnen, um die Inhaltsstoffe der Kapsel freizusetzen. Die Kapsel ist typischerweise zur Aufbewahrung luftdicht verschlossen. Eine Seite der Kapsel kann durch eine Folie gebildet sein, und die Aufnahmeeinheit kann eingerichtet sein, die Folie von der Kapsel zu entfernen oder die Folie der Kapsel zu durchstoßen, um die Inhaltsstoffe der Kapsel freizusetzen.

Das Gerät kann einen Flüssigkeitsbehälter zur Aufnahme von Wasser oder einer anderen Flüssigkeit, beispielsweise Milch, umfassen. Die Inhaltsstoffe der Kapsel können eine Backmischung für das Backerzeugnis umfassen. Des Weiteren kann das Gerät einen Mischer umfassen, der eingerichtet ist, den Teig für das Backerzeugnis aus der Backmischung und aus Flüssigkeit aus dem Flüssigkeitsbehälter herzustellen. Die Verwendung von Kapseln mit Backmischungen ermöglicht die Verwendung relativ kompakter und leichter Kapseln. Insbesondere kann eine Kapsel derart kompakt sein, dass die Kapsel ein Volumen bzw. ein Fassungsvermögen aufweist, das substantiell dem Volumen der darin enthaltenen Inhaltsstoffe entspricht. Beispielsweise kann das Fassungsvermögen einer Kapsel das Volumen an Inhaltsstoffen der Kapsel nur um 20%, 10% oder weniger übersteigen.

Das Gerät kann auch eingerichtet sein, um eine Backmischung zu verarbeiten, in welcher die für den Teig erforderliche Flüssigkeit bereits enthalten ist. Dabei kann die Flüssigkeit in einem separierten Teilbereich der Kapsel enthalten und somit zwecks einfacherer Lagerung von weiteren, trockenen Bestandteilen der Backmischung getrennt sein, oder die Backmischung kann eine feuchte und insbesondere zur weiteren Verarbeitung fertige Verbindung sein. In einem solchen Fall beschränkt sich die Funktion des Mischers gegebenenfalls auf das Entnehmen der Verbindung aus der Kapsel sowie Kneten und Formen, wie es für die Bildung des gewünschten Backerzeugnisses erforderlich sein mag. Ein Behälter für Flüssigkeit ist an einem solchen Gerät dann nicht erforderlich.

Das Gerät umfasst weiter eine Backeinheit, die eingerichtet ist, einen Teig zu backen. Außerdem umfasst das Gerät eine Ausgabeeinheit zur Ausgabe eines in der Backeinheit gebackenen Backerzeugnisses. Des Weiteren umfasst das Gerät eine Steuereinheit, die eingerichtet ist, zu veranlassen, dass aus den Inhaltsstoffen einer in die Aufnahmeeinheit eingeführten Kapsel ein Teig hergestellt wird, und dass der Teig in der Backeinheit gebacken wird. Die Steuereinheit ist weiter eingerichtet, zu veranlassen, dass das aus dem Teig gebackene, individuell portionierte, Backerzeugnis über die Ausgabeeinheit ausgegeben wird.

Die Ausgabeeinheit ist eingerichtet, das Backerzeugnis vor der Ausgabe zu kühlen. Durch das Kühlen im Anschluss an den Backprozess in der Backeinheit kann der Herstellungsprozess des Backerzeugnisses beschleunigt werden, da das Backerzeugnis schneller an einen Nutzer ausgegeben werden kann.

Das Gerät ermöglicht es somit einem Nutzer in einfacher Weise, ein individuell portioniertes Backerzeugnis herzustellen. Insbesondere kann durch das Einführen einer kompakten Kapsel in die Aufnahmeeinheit des Geräts die Herstellung eines individuell portionierten Backerzeugnisses aus den Inhaltsstoffen der eingeführten Kapsel bewirkt werden.

Die Backeinheit kann eingerichtet sein, den Teig zumindest teilweise durch Einwirken eines erwärmten gasförmigen Mediums zu backen. Mit anderen Worten, in der Backeinheit kann ein Backprozess durchgeführt werden, bei dem der Teig expandieren kann und bei dem das Backerzeugnis eine knusprige Oberfläche und Textur erhalten kann.

Alternativ oder ergänzend zu der Verwendung von Kapseln mit einer Backmischung können die Inhaltsstoffe einer Kapsel den Teig für das Backerzeugnis umfassen. Der fertige Teig aus der Kapsel kann somit direkt zur Herstellung des Backerzeugnisses (z.B. zum Backen in der Backeinheit) verwendet werden. So kann die Herstellung des Backerzeugnisses beschleunigt werden.

Die Kapsel kann ein Identifikationsmittel aufweisen. Das Identifikationsmittel kann z.B. einen QR-Code, einen Barcode, einen Magnetchip, einen elektronischen Chip, ein äußeres Erscheinungsbild der Kapsel, ein Identifikationsmuster und/oder eine Identifikationsnummer umfassen. Die Steuereinheit kann eingerichtet sein, auf Basis der Identifikationsmittel Information bezüglich des Backerzeugnisses zu ermitteln, welches aus den Inhaltsstoffen der Kapsel hergestellt werden kann. Die Information bezüglich des Backerzeugnisses kann anzeigen, wie das Backerzeugnis durch das Gerät hergestellt werden soll. Insbesondere kann die Information bezüglich des Backerzeugnisses z.B. eine Backtemperatur, eine Backzeit und/oder eine Form des Backerzeugnisses umfassen. Durch die Verwendung von Identifikationsmitteln wird die Herstellung eines individuell portionierten Backerzeugnisses weiter vereinfacht.

Das Gerät kann eine Verformungseinheit umfassen, die eingerichtet ist, den Teig für das Backerzeugnis zu formen. Insbesondere kann die Verformungseinheit eingerichtet sein, Teig in eine Vielzahl unterschiedlicher (ggf. vordefinierten) Formen zu formen (z.B. anhand von einer Vielzahl unterschiedlicher Backformen). Die Steuereinheit kann eingerichtet sein, eine erste Form aus der Vielzahl von (ggf. vordefinierten) Formen für das Backerzeugnis zu ermitteln, und die Verformungseinheit zu veranlassen, den Teig für das Backerzeugnis gemäß der ersten Form zu formen. Die erste Form kann auf Basis der Identifikationsmittel der Kapsel und/oder auf Basis einer Nutzereingabe ermittelt werden. Die Verformungseinheit ermöglicht somit eine weitere Individualisierung des hergestellten Backerzeugnisses.

Das Gerät kann eine Benutzerschnittstelle umfassen. Alternativ oder ergänzend kann über ein elektronisches Gerät (z.B. ein mobiles Endgerät, wie ein Smartphone) eine Benutzerschnittstelle bereitgestellt werden. Über die Benutzerschnittstelle können Parameter für das Backerzeugnis eingegeben werden. Dabei können die Parameter z.B. eine Form des Backerzeugnisses, einen Grad der Süße des Backerzeugnisses und/oder eine Backstufe zur Herstellung des Backerzeugnisses umfassen. Durch die Bereitstellung einer Benutzerschnittstelle wird eine weitere Individualisierung des Backerzeugnisses ermöglicht.

Die Steuereinheit kann eingerichtet sein, zu detektieren, dass die Kapsel in die Aufnahmeeinheit eingeführt wird oder ist. Des Weiteren kann die Steuereinheit eingerichtet sein, in Reaktion darauf (ggf. direkt, ohne weitere Eingabe durch einen Nutzer), die Herstellung des Backerzeugnisses aus den Inhaltsstoffen der eingeführten Kapsel anzustoßen. Es wird somit eine weiter vereinfachte Herstellung eines individuell portionierten Backerzeugnisses ermöglicht.

Das Gerät kann einen Behälter zur Aufnahme von Süßmittel (z.B. Zucker) umfassen. Die Steuereinheit kann eingerichtet sein, einen Grad der Süße des herzustellenden Backerzeugnisses zu ermitteln, und zu veranlassen, dass Süßmittel gemäß dem Grad der Süße dem Teig für das Backerzeugnis zugeführt wird. Die Bereitstellung eines Behälters zur Aufnahme von Süßmittel ermöglicht somit eine weitere Individualisierung des Backerzeugnisses.

Das Gerät kann eine Dekorationseinheit umfassen, die eingerichtet ist, essbares Material zur Dekoration (z.B. Schokolade und/oder Zuckerguss) auf das Backerzeugnis aufzubringen. Durch die Dekorationseinheit wird eine weitere Individualisierung des Backerzeugnisses ermöglicht.

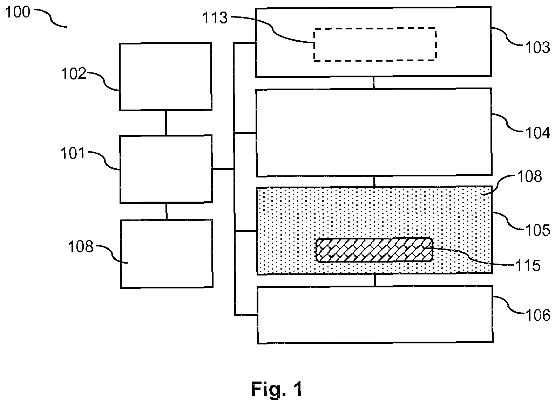

Im Weiteren wird die Erfindung anhand eines in der Zeichnung dargestellten Ausführungsbeispiels näher beschrieben. Dabei zeigt Figur 1 ein Blockdiagramm eines beispielhaften Geräts zur Herstellung eines Backerzeugnisses.

Wie eingangs dargelegt, befasst sich das vorliegende Dokument mit der individuellen Zubereitung eines Backerzeugnisses. Fig. 1 zeigt in diesem Zusammenhang ein Blockdiagramm eines Geräts 100 zur Herstellung eines Backerzeugnisses, wie z.B. eines Kekses. Das Gerät 100 kann als ein Haushaltsgerät, insbesondere als ein Küchengerät, bereitgestellt sein. Alternativ kann das Gerät 100, ähnlich wie ein Kaffeeautomat, in einem öffentlichen Gebäude bereitgestellt sein, um, z.B. gegen Zahlung einer Gebühr, ein individuelles Backerzeugnis bereitzustellen.

Das Gerät 100 umfasst eine Steuereinheit 101, die eingerichtet ist, den Herstellungsprozess des Backerzeugnisses zu steuern. Über eine Benutzerschnittstelle 102 kann ein Nutzer die Herstellung des Backerzeugnisses initiieren. Des Weiteren können über die Benutzerschnittstelle 102 ein oder mehrere Parameter des Herstellungsprozesses von dem Nutzer angepasst werden (z.B. eine Bräunungsstufe des Backerzeugnisses).

Das Gerät 100 umfasst eine Aufnahmeeinheit 103 zur Aufnahme einer Kapsel 113 (bzw. einer Kartusche oder einer Patrone). Die Kapsel 113 kann durch einen Nutzer in die Aufnahmeeinheit 103 eingeführt werden. Die Aufnahmeeinheit 103 kann als Öffnung z.B. einen der Form der Kapsel 113 entsprechenden Spalt aufweisen. Durch das Einführen der Kapsel 113 kann ggf. direkt der Herstellungsprozess des Backerzeugnisses angestoßen werden (ohne weitere Eingabe über die Benutzerschnittstelle 102).

Die Kapsel 113 kann den für die Herstellung des Backerzeugnisses erforderlichen Teig enthalten. Dabei enthält die Kapsel 113 typischerweise nur so viel Teig, wie für die Herstellung eines Backerzeugnisses (z.B. eines Kekses) benötigt wird. Es kann somit die Herstellung individuell portionierter Backerzeugnisse bewirkt werden.

Unterschiedliche Kapseln 113 können unterschiedlichen Teig zur Herstellung von geschmacklich unterschiedlichen Backerzeugnissen enthalten. So kann ein Nutzer durch das Einführen unterschiedlicher Kapseln 113 zu unterschiedlichen Zeitpunkten Backerzeugnisse mit unterschiedlichen Geschmacksrichtungen herstellen lassen.

Das Gerät 104 kann weiter eine Verformungseinheit 104 umfassen, die eingerichtet ist, den Teig aus der Kapsel 113 in eine bestimmte drei-dimensionale (3D) Form zu bringen. Beispielsweise kann die Verformungseinheit 104 ein oder mehrere ggf. unterschiedliche vordefinierte Backformen aufweisen, in die der Teig aus einer Kapsel 113 aufgenommen werden kann. Eine Backform kann z.B. von einem Nutzer und/oder in Abhängigkeit von der Kapsel 113 ausgewählt werden, und der Teig kann aus der Kapsel 113 in die ausgewählte Backform überführt (z.B. gepresst) werden.

Der geformte Teig kann dann (ggf. in der Backform) in eine Backeinheit 105 (z.B. in einen Backofen) des Geräts 100 überführt werden. In der Backeinheit 105 wird der Teig typischerweise zumindest teilweise durch ein erhitztes gasförmiges Medium 108 (z.B. erhitzte Luft) gebacken, um das Backerzeugnis 115 herzustellen.

Im Anschluss an den Backvorgang in der Backeinheit 105 kann das gebackene Backerzeugnis 115 über eine Ausgabeeinheit 106 an den Nutzer ausgegeben werden. In der Ausgabeeinheit 106 kann das Backerzeugnis 115 ggf. gekühlt werden, bevor ein Zugriff auf das Backerzeugnis 115 durch den Nutzer ermöglicht wird. So kann vermieden werden, dass sich der Nutzer bei der Entgegennahme des frisch hergestellten Backerzeugnisses 115 die Finger verbrennt.

Das Gerät 100 ermöglicht somit die Herstellung eines individuell portionierten Backerzeugnisses 115 (z.B. eines einzelnen Kekses). Der dafür erforderliche Teig kann über eine Kapsel 113 in das Gerät 100 eingebracht werden. Die Kapsel 113 kann Identifikationsmittel, z.B. in Form eines QR-Codes, eines Barcodes, einer Identifikationsnummer, eines Identifikationsmusters, eines Magnetchips und/oder einer äußeren Erscheinungsform der Kapsel 113, aufweisen. Die Steuereinheit 101 kann auf Basis der Identifikationsmittel ermitteln, welches Backerzeugnis 115 mit dem Teig in der Kapsel 113 hergestellt werden soll. Des Weiteren können Herstellungsparameter, wie z.B. die zu verwendende Backform, die zu verwendende Backtemperatur, die zu verwendende Backdauer etc. auf Basis von den Identifikationsmitteln ermittelt werden. Dazu können die Herstellungsparameter für unterschiedliche Backerzeugnisse 115 auf einer Speichereinheit 108 des Geräts 100 gespeichert sein. Die Steuereinheit 101 kann dann auf Basis der Identifikationsmittel die Herstellungsparameter für ein Backerzeugnis 115 von der Speichereinheit 108 beziehen.

Die Aufnahmeeinheit 103 kann eingerichtet sein, die luftdicht verschlossene Kapsel 113 zu öffnen oder anderweitig zu erschließen. Der in der Kapsel 113 enthaltene Teig kann durch die Verformungseinheit 104 in eine vorgegebene oder in eine von einem Nutzer gewählte 2,5-dimensionale oder 3-dimensionale Form gebracht werden. Der geformte Teig kann anschließend durch ein geeignetes Verfahren gebacken werden. Das Backverfahren kann dabei auch Mikrogaren, Durchlauf-Garen, Infrarotbacken, Mikrowellen-Garen, etc. umfassen.

Alternativ zu einem fertigen Teig kann über die Kapsel 113 eine trockene Backmischung für ein Backerzeugnis 115 bereitgestellt werden. Das Gerät 100 kann einen Wassertank (nicht in Fig. 1 dargestellt) aufweisen. Des Weiteren kann das Gerät 100 eingerichtet sein, die Backmischung aus der Kapsel 113 mit Wasser aus dem Wassertrank zu mischen (z.B. innerhalb der Verformungseinheit 104), um den Teig für das Backerzeugnis 115 herzustellen.

Die Kapsel 113 wird durch einen Nutzer in die Aufnahmeeinheit 103 eingeführt, wobei die Aufnahmeeinheit 103 verschließbar sein kann (z.B. durch eine Klappe oder ein Schubelement). Über die Identifikationsmittel können z.B. die Sorte, die Geschmacksrichtung, die Geometrie und die Herstellungsparameter des Backerzeugnisses 115 ermittelt werden. Die Geschmacksrichtung und evtl. weitere Informationen bzgl. des Backerzeugnisses 115 können über die Benutzerschnittstelle 102 (z.B. über eine Anzeige des Geräts 100) ausgegeben werden. Über die Benutzerschnittstelle 102 kann ggf. zusätzlich die Härte des Backerzeugnisses 115 und/oder der Zuckergehalt des Backerzeugnisses 115 individuell gewählt werden. Ebenso kann über die Benutzerschnittstelle 102 ggf. die Form des Backerzeugnisses 115 aus einer gegebenen Vorauswahl durch den Nutzer ausgewählt werden.

Nach der Auswahl von Einstellungen kann der Herstellungsvorgang über die Benutzerschnittstelle 102 durch den Nutzer initiiert werden. Alternativ zu einer Eingabe über eine Benutzerschnittstelle 102 des Geräts 100 kann ggf. eine Schnittstelle über ein mobiles Gerät (z.B. ein Smartphone oder Tablet PC) bereitgestellt werden, welches über eine drahtlose Schnittstelle wie Bluetooth, WLAN, NFC, etc. mit dem Gerät 100 verbunden ist.

Der Teig wird im Inneren des Geräts 100 (insbesondere in der Verformungseinheit 104 und der Backeinheit 105) verarbeitet, geformt und gebacken. Über eine Ausgabeeinheit 106 wird das fertige Backerzeugnis 115 z.B. auf einer Auslage des Geräts 100 ausgegeben.

Die für den Betrieb des Geräts 100 erforderliche elektrische Energie kann z.B. über einen drahtgebundenen Netzanschluss, über ein Magnetfeld und/oder über Solarzellen bereitgestellt werden.

Das Gerät 100 kann eine Dekorationseinheit (nicht in Fig. 1 dargestellt) umfassen, die eingerichtet ist, das Backerzeugnis 115 vor der Ausgabe (z.B. mit Schokolade, Zuckerguss oder Lebensmittelfarbe) zu verzieren.

Das in diesem Dokument beschriebene Gerät 100 ermöglicht die effiziente und individuelle Herstellung eines Backerzeugnisses 115 (z.B. eines einzelnen Kekses). Unterschiedliche Backerzeugnisse 115 können durch Einführen von unterschiedlichen Kapseln 113 ausgewählt werden. Des Weiteren ermöglicht das Gerät 100 ggf. weitere Individualisierungen hinsichtlich Form, Zusammensetzung, Süße (Zuckergehalt), und/oder Härte (Backdauer) des Backerzeugnisses 115.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Geräts veranschaulichen sollen.

## Patentansprüche

1. System umfassend ein Gerät (100) zur Herstellung eines individuell portionierten Backerzeugnisses (115) und eine kompakte Kapsel (113), wobei die Kapsel (113) eine Menge von Inhaltsstoffen umfasst, die genau für die Herstellung des individuell portionierten Backerzeugnisses (115) ausreicht; wobei die Inhaltsstoffe eine Backmischung für das Backerzeugnis (115) umfassen; wobei das Gerät (100) umfasst,
- eine Aufnahmeeinheit (103), die eingerichtet ist, die kompakte Kapsel (113) aufzunehmen, wobei die Aufnahmeeinheit (103) eine Öffnung aufweist, durch die die Kapsel (113) in das Gerät (100) eingeführt werden kann; und wobei die Aufnahmeeinheit (103) eingerichtet ist, die Kapsel (113) zu öffnen, um die Inhaltsstoffe freizusetzen;
- einen Mischer, der eingerichtet ist, einen Teig für das Backerzeugnis (115) aus der Backmischung herzustellen;
- eine Backeinheit (104), die eingerichtet ist, den Teig zu backen;
- eine Steuereinheit (101), die eingerichtet ist, zu veranlassen,
- dass aus den Inhaltsstoffen einer in die Aufnahmeeinheit (103) eingeführten Kapsel (113) ein Teig hergestellt wird;
- dass der Teig in der Backeinheit (104) zu dem Backerzeugnis (115) gebacken wird;
**dadurch gekennzeichnet, dass**
- das Gerät (100) eine Ausgabeeinheit (106) zur Ausgabe des in der Backeinheit (104) gebackenen Backerzeugnisses (115) aufweist; wobei
- die Ausgabeeinheit (106) eingerichtet ist, das Backerzeugnis (115) vor der Ausgabe zu kühlen.

2. System gemäß Anspruch 1, wobei die Backeinheit (104) eingerichtet ist, den Teig zumindest teilweise durch Einwirken eines erwärmten gasförmigen Mediums (108) zu backen.

3. System nach einem der vorhergehenden Ansprüche, bei welchem das Gerät (100) einen Behälter zur Aufnahme einer Flüssigkeit umfasst, und dessen Mischer eingerichtet ist, den Teig aus der Backmischung und der Flüssigkeit aus dem Behälter herzustellen.

4. System gemäß einem der vorhergehenden Ansprüche, wobei
a. die Kapsel (113) ein Identifikationsmittel aufweist; und
b. die Steuereinheit (101) eingerichtet ist, auf Basis der Identifikationsmittel, Information bezüglich des Backerzeugnisses (115) zu ermitteln, welches aus den Inhaltsstoffen der Kapsel (113) hergestellt werden kann.

5. System gemäß Anspruch 4, wobei die Identifikationsmittel ein oder mehrere umfassen von: einen QR-Code, einen Barcode, einen Magnetchip, einen elektronischen Chip, ein äußeres Erscheinungsbild der Kapsel (113), ein Identifikationsmuster und/oder eine Identifikationsnummer.

6. System gemäß einem der Ansprüche 4 und 5, wobei die Information bezüglich des Backerzeugnisses (115) ein oder mehrere umfasst von: eine Backtemperatur, eine Backzeit und/oder eine Form des Backerzeugnisses (115).

7. System gemäß einem der vorhergehenden Ansprüche, wobei das Gerät (100) eine Verformungseinheit (104) umfasst, die eingerichtet ist, den Teig für das Backerzeugnis (115) zu formen.

8. System gemäß Anspruch 7, wobei
a. die Verformungseinheit (104) eingerichtet ist, Teig in eine Vielzahl von unterschiedlichen Formen zu formen; und
b. die Steuereinheit (101) eingerichtet ist, eine erste Form aus der Vielzahl von Formen für das Backerzeugnis (115) zu ermitteln, und die Verformungseinheit (104) zu veranlassen, den Teig für das Backerzeugnis (115) gemäß der ersten Form zu formen.

9. System gemäß einem der vorhergehenden Ansprüche, wobei
a. über eine Benutzerschnittstelle (102) Parameter für das Backerzeugnis eingegeben werden können; und
b. die Parameter ein oder mehrere umfassen von: eine Form des Backerzeugnisses (115), einen Grad der Süße des Backerzeugnisses (115) und/oder eine Back-stufe zur Herstellung des Backerzeugnisses (115).

10. System gemäß einem der vorhergehenden Ansprüche, wobei die Steuereinheit (101) eingerichtet ist,
a. zu detektieren, dass die Kapsel (113) in die Aufnahmeeinheit (103) eingeführt wird; und
b. in Reaktion darauf, die Herstellung des Backerzeugnisses (115) aus den Inhaltsstoffen der eingeführten Kapsel (113) zu veranlassen.

11. System gemäß einem der vorhergehenden Ansprüche, wobei
a. das Gerät (100) einen Behälter zur Aufnahme von Süßmittel umfasst; und
b. die Steuereinheit (101) eingerichtet ist, einen Grad der Süße des herzustellenden Backerzeugnisses (115) zu ermitteln, und zu veranlassen, dass Süßmittel gemäß dem Grad der Süße dem Teig für das Backerzeugnis (115) zugeführt wird.

12. System gemäß einem der vorhergehenden Ansprüche, wobei das Gerät (100) eine Dekorationseinheit umfasst, die eingerichtet ist, essbares Material zur Dekoration auf das Backerzeugnis (115) aufzubringen.

## Claims

1. System including a device (100) for producing an individual portion of a baked product (115) and a compact capsule (113), wherein the capsule (113) includes a quantity of contents that is exactly sufficient for producing the individual portion of baked product (115); wherein the contents include a baking mix for the baked product (115); wherein the device (100) includes
- a receiving unit (103) that is configured to receive a compact capsule (113), wherein the receiving unit (103) has an opening through which the capsule (113) can be inserted into the device (100); and wherein the receiving unit (103) is configured to open the capsule (113) in order to release the contents;
- a mixer that is configured to produce, from the baking mix, a dough for the baked product (115);
- a baking unit (104) that is configured to bake the dough;
- a control unit (101) that is configured to trigger
- the production of a dough from the contents of a capsule (113) inserted into the receiving unit (103);
- the baking of the dough into the baked product (115) in the baking unit (104);
**characterised in that**
- the device (100) has a discharge unit (106) for discharging the baked product (115) that has been baked in the baking unit (104); wherein
- the discharge unit (106) is configured to cool the baked product (115) before it is discharged.

2. System according to claim 1, wherein the baking unit (104) is configured to bake the dough at least partly by the action of a heated gaseous medium (108).

3. System according to one of the preceding claims, in which the device (100) includes a container for receiving a liquid, and whereof the mixer is configured to produce the dough from the baking mix and the liquid from the container.

4. System according to one of the preceding claims, wherein
a. the capsule (113) has an identification arrangement; and
b. the control unit (101) is configured to determine, on the basis of the identification arrangements, information on the baked product (115) that can be produced from the contents of the capsule (113).

5. System according to claim 4, wherein the identification arrangements include one or more of: a QR code, a bar code, a magnetic chip, an electronic chip, an external appearance of the capsule (113), an identification pattern and/or an identification number.

6. System according to one of claims 4 or 5, wherein the information on the baked product (115) includes one or more of: a baking temperature, a baking time and/or a shape of the baked product (115).

7. System according to one of the preceding claims, wherein the device (100) includes a deforming unit (104) that is configured to shape the dough for the baked product (115).

8. System according to claim 7, wherein
a. the deforming unit (104) is configured to shape dough into a plurality of different shapes; and
b. the control unit (101) is configured to determine a first shape from the plurality of shapes for the baked product (115), and to trigger shaping by the deforming unit (104) of the dough for the baked product (115) into the first shape.

9. System according to one of the preceding claims, wherein
a. parameters for the baked product may be input by way of a user interface (102); and
b. the parameters include one or more of: a shape of the baked product (115), a degree of sweetness of the baked product (115) and/or an amount of baking for producing the baked product (115).

10. System according to one of the preceding claims, wherein the control unit (101) is configured
a. to detect the fact that the capsule (113) is inserted into the receiving unit (103); and
b. to trigger production of the baked product (115) from the contents of the inserted capsule (113) as a response thereto.

11. System according to one of the preceding claims, wherein
a. the device (100) includes a container for receiving sweetener; and
b. the control unit (101) is configured to determine a degree of sweetness of the baked product (115) to be produced and to trigger the supply of sweetener to the dough for the baked product (115), depending on the degree of sweetness.

12. System according to one of the preceding claims, wherein the device (100) includes a decorating unit that is configured to apply edible material to the baked product (115) for the purpose of decoration.

## Revendications

1. Système comprenant un appareil (100) de production d'un produit de boulangerie (115) portionné individuellement et une capsule compacte (113), dans lequel la capsule (113) comprend une quantité d'ingrédients qui suffit précisément pour la production du produit de boulangerie (115) portionné individuellement ; dans lequel les ingrédients comprennent un mélange de boulangerie pour le produit de boulangerie (115) ; dans lequel l'appareil (100) comprend,
- une unité de réception (103), qui est conçue pour recevoir la capsule compacte (113), dans lequel l'unité de réception (103) présente une ouverture à travers laquelle la capsule (113) peut être introduite dans l'appareil (100) ; et dans lequel l'unité de réception (103) est conçue pour ouvrir la capsule (113) pour libérer les ingrédients ;
- un mélangeur qui est conçu pour produire une pâte pour le produit de boulangerie (115) à partir du mélange de boulangerie ;
- une unité de cuisson (104) qui est conçue pour cuire la pâte ;
- une unité de commande (101) qui est conçue pour faire que,
- à partir des ingrédients d'une capsule (113) introduite dans l'unité de réception (103), une pâte soit produite ;
- la pâte soit cuite dans l'unité de cuisson (104) pour devenir le produit de boulangerie (115) ;
**caractérisé en ce que**
- l'appareil (100) présente une unité de distribution (106) pour distribuer le produit de boulangerie (115) cuit dans l'unité de cuisson (14) ; dans lequel
- l'unité de distribution (106) est conçue pour refroidir le produit de boulangerie (115) avant la distribution.

2. Système selon la revendication 1, dans lequel l'unité de cuisson (104) est conçue pour cuire la pâte au moins partiellement par l'action d'un agent gazeux chauffé (108).

3. Système selon l'une des revendications précédentes, dans lequel l'appareil (100) comprend un récipient pour recevoir un liquide, et dont le mélangeur est conçu pour produire la pâte à partir du mélange de boulangerie et du liquide à partir du récipient.

4. Système selon l'une des revendications précédentes, dans lequel
a. la capsule (113) présente un moyen d'identification ; et
b. l'unité de commande (101) est conçue pour déterminer, en se basant sur les moyens d'identification, une information relative au produit de boulangerie (115) qui peut être produit à partir des ingrédients de la capsule (113).

5. Système selon la revendication 4, dans lequel les moyens d'identification comprennent un ou plusieurs de : un code QR, un code-barres, une puce magnétique, une puce électronique, une identité visuelle extérieure de la capsule (113), un motif d'identification et/ou un numéro d'identification.

6. Système selon la revendication 4 et 5, dans lequel l'information relative au produit de boulangerie (115) comprend un ou plusieurs de : une température de cuisson, un temps de cuisson et/ou une forme du produit de boulangerie (115).

7. Système selon l'une des revendications précédentes, dans lequel l'appareil (100) comprend une unité de façonnage (104) qui est conçue pour façonner la pâte pour le produit de boulangerie (115).

8. Système selon la revendication 7, dans lequel
a. l'unité de façonnage (104) est conçue pour façonner la pâte dans une pluralité de formes différentes ; et
b. l'unité de commande (101) est conçue pour déterminer une première forme à partir de la pluralité de formes pour le produit de boulangerie (115), et faire que l'unité de façonnage (104) forme la pâte pour le produit de boulangerie (115) selon la première forme.

9. Système selon l'une des revendications précédentes, dans lequel
a. des paramètres pour le produit de boulangerie peuvent être saisis par le biais d'une interface utilisateur (102) ; et
b. les paramètres comprennent un ou plusieurs de : une forme du produit de boulangerie (115), un degré de goût sucré du produit de boulangerie (115) et/ou un degré de cuisson pour la production du produit de boulangerie (115).

10. Système selon l'une des revendications précédentes, dans lequel l'unité de commande (101) est conçue pour,
a. détecter que la capsule (113) est introduite dans l'unité de réception (103) ; et
b. en réaction à cela, déclencher la fabrication du produit de boulangerie (115) à partir des ingrédients de la capsule (113) introduite.

11. Système selon l'une des revendications précédentes, dans lequel
a. l'appareil (100) comprend un récipient pour recevoir des édulcorants ; et
b. l'unité de commande (101) est conçue pour déterminer un degré de goût sucré du produit de boulangerie (115) à produire, et pour faire que de l'édulcorant soit ajouté à la pâte pour le produit de boulangerie (115) selon le degré de goût sucré.

12. Système selon l'une des revendications précédentes, dans lequel l'appareil (100) comprend une unité de décoration qui est conçue pour appliquer de la matière de décoration comestible sur le produit de boulangerie (115).
